# EUROPEAN PATENT APPLICATION

(11) **EP 4 741 804 A1**
(43) Date of publication of application: **13.05.2026**
(21) Application number: 24211264.7
(22) Date of filing: 06.11.2024
(51) Int. Cl.: G01N 21/64, G02B 21/00, G02B 21/36

(54) **DEVICE AND METHOD FOR IMAGE ACQUISITION**

(71) Applicant: Leica Microsystems CMS GmbH, 35578 Wetzlar (DE)
(72) Inventor: Welti, Stefan, 35578 Wetzlar (DE); Reymann, Juergen, 35578 Wetzlar (DE)
(74) Representative: Paustian & Partner Patentanwälte mbB

(57) **Abstract**

A first aspect of the present disclosure is related to a device for image acquisition,
configured to:
- select a plurality of excitations for exciting a sample,
- adjust in a first step:
-- a configuration of one of the selected excitations or;
-- a configuration of a global excitation , wherein the global excitation is based on one or more of the selected excitations;
- adjust in a second step and based on the configuration adjusted in the first step:
-- a configuration of one or more of the non-adjusted, selected excitations; and/or
-- a configuration of the global excitation, respectively;

- providing the adjusted configurations for performing an excitation of the sample.

## Description

### Technical Field

This disclosure is related to devices for image acquisition and methods therefor.

### Background

In fluorescence imaging, various problems can occur that make it necessary to adjust the configurations for one or more excitation channels. These can be, for example, fluctuations in the strength of individual colorations or the coloration as a whole, as well as differences in the depth of penetration due to the respective new selection of the recording area. For subsequent image processing steps (e.g. unmixing), further requirements may have to be considered. Overall, the adjustment process is cumbersome and timeconsuming. Improvements are desired.

### Summary

An object of the present disclosure is to improve fluorescence imaging.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for image acquisition,
*configured to:*
- *select a plurality of excitations for exciting a sample,*
- *adjust in a first step:*
   - a *configuration of one of the selected excitations or;*
   -- a *configuration of a global excitation* , *wherein the global excitation is based on one or more of the selected excitations;*
   *- adjust in a second step and based on the configuration adjusted in the first step:*
      -- a *configuration of one or more of the non-adjusted, selected excitations; and*/*or*
      -- *a configuration of the global excitation, respectively;*
   *- providing the adjusted configurations for performing an excitation of the sample.*

A device for image acquisition can be an imaging device, e.g., a microscope, an endoscope, an exoscope, or it can be a device that is configured to exchange information with an imaging device. If the device exchanges information with an imaging device, the device can be a network device and in particular be in communication with a plurality of imaging devices.

The term "excitation" refers to a process where light at a specific wavelength energizes a fluorophore in a sample, causing the fluorophore to absorb energy and enter an excited state. After this, the fluorophore quickly returns to its ground state, releasing energy as fluorescence emission, in particular at a longer wavelength. The fluorescence emission can then be captured to create an image. Excitation and emission wavelengths may be selected using filters to ensure only the desired light is used and detected. In other words, an excitation can relate to one or more light configurations to excite a target fluorophore.

Selecting a plurality of excitations in the context of this disclosure means that a plurality of light configurations are selected. Each light configuration can comprise one or more parameters such as frequency, intensity, and/or transient of an exciting light. Additionally or alternatively, an excitation can be indirectly defined by one or more parameters of the florescence emission, such as frequency, intensity, and/or transient behavior of the respective fluorescence emission. Another indirect emission-related parameter which can be additionally or alternatively comprised by an excitation can be related to a crosstalk, e.g. an extend of an excitation of a fluorophore, which is not targeted by the excitation.

Adjusting a configuration of an excitation in the context of this disclosure means that at least one parameter of an excitation is adapted, e.g. set to an intended value. An adjustment, in particular an adjustment of an excitation in the first step, can be performed manually and/or automatically.

An adjustment of a (leading) excitation in a first step follows, in a second step, an adjustment of other selected excitations, in particular all other selected excitations. Hence, based on an intended value adjusted for a parameter of an excitation in the first step, other values for parameters of other excitations are adjusted. Hence, a problem of adjusting a plurality of excitation can be reduced to the problem of adjusting only one excitation and wherein the other excitations are following the adjustment of the first excitation. This may simplify an automatic and/or manual adjustment process of a plurality of excitations intended to be used for exciting a sample stained with a plurality of fluorophores.

The adjusted configurations for the different excitation can be provided to the optical unit of the imaging device. In case the device is an imaging device, the information can be provided internally. In case, the device is not an imaging system but in communication with an imaging system, the information can be provided such that an intended imaging system can use this information. A provision of information, e.g. configuration information about an excitation, in the sense of this disclosure can comprise sending the information and/or storing the information for others to fetch, e.g. storing the information in a shared memory.

The imaging device, which obtains the adjusted configurations can operate, e.g., a laser via an optic in order to realize the obtained configurations as excitations for exciting a stained sample. By a device according to the first aspect of this disclosure, a set of excitations can be determined efficiently for exciting a stained sample.

An embodiment of the first aspect is related to a device for image acquisition, *configured to:*
- *obtain selection information from a user interface* , *and wherein the selection of the excitations is based on the obtained selection information;*
- *obtain adjustment information from the user interface, and wherein the adjustment of the configuration of the excitation in the first step is based on the obtained adjustment information.*

In this embodiment, a manual adjustment of an excitation is performed, e.g. by a microscope user or a surgeon. The manual adjustment can be related to a selected excitation. Additionally or alternatively, the manual adjustment can be related to a virtual excitation on which the other excitations (i.e. the selected excitations) are based on.

A user interface can be a graphical user interface, but also another type of user interface, e.g. audio, haptic, and/or gesture based user interfaces are possible.

Based on the obtained information from a user, an excitation is configured in a first step and in a second step one or more further excitations are configured based on the configuration performed during the second step.

An embodiment of the first aspect is related to a device for image acquisition, *wherein a configuration of an excitation can comprise one or more of:*
*- frequency-dependent information;*
*- time-dependent information.*

As explained above, a configuration of an excitation can comprise one or more parameters relating directly or indirectly to the excitation (an indirectly-relating parameter can relate directly to an emission caused by a specific excitation).

A configuration of an excitation can comprise a frequency-dependent information, such as a spectrum that covers a plurality of frequencies each with an individual intensity. When adjusting a frequency-related excitation parameter, a maximal intensity value of a spectrum can be adjusted. Additionally or alternatively, a minimum and/or a maximum frequency of a spectrum can be adjusted.

A configuration of an excitation can comprise a time-dependent information. Time-dependent information can relate to the wave form (i.e. the signal form) of the exciting light beam. For example, an intensity of the excitation can be adjusted.

An embodiment of the first aspect is related to a device for image acquisition, *wherein an adjustment of the configuration of one or more of the excitations comprises an adjustment of an intensity of the excitation.*

The intensity of excitation may refer to the power and/or energy of a light excitation intended to excite a fluorophore within a sample. The intensity of the excitation light can match the absorption peak of the fluorophore to maximize a number of excited molecules, i.e. to maximize an emission intensity. Hence, an intensity may be related to a power/energy provided via a specific frequency or frequency range (spectra). An intensity of the light source may be measured in milliwatts (mW) or as a function of irradiance (mW/cm²), which is the amount of light energy hitting the sample per unit area.

An intensity of an excitation light may depend on the light source being used. Common light sources include lasers, mercury lamps, and LEDs. Lasers, for example, provide high-intensity, monochromatic light, while mercury lamps provide a broader spectrum that can be filtered. An intensity may therefore relate to an intensity of light at a light source. Alternatively an intensity may relate to an intensity of light as it enters a sample (e.g. an intensity of a light after being filtered).

An intensity may depend on the optical set up used. For example, the numerical aperture of an objective lens may affect how much of the excitation light is focused onto the sample. Higher aperture lenses focus the light more tightly, increasing the local excitation intensity. Hence, as already described above, an intensity may relate to an intensity of light when it enters a sample (e.g. an intensity of a light after being filtered).

If the excitation intensity is too high, it can cause photobleaching, where fluorophores lose their ability to fluoresce after being excited too many times. This may limit the time you can observe the sample and can also damage living cells in biological samples (phototoxicity). An intensity may be related to the effect of photo bleaching. If the excitation intensity is too low, the fluorescence signal may be weak, leading to poor image contrast and resolution, making it difficult to observe details. An intensity may be related to the emission signal strength and/or to a signal-to-noise ratio of the emission signal.

Intensity may be adjusted by control information for a light source (e.g., dimming LEDs or adjusting power/energy). Additionally or alternatively, an intensity may be adjusted by providing filter information, e.g., a neutral density filter is configured to reduce the light reaching a sample.

Intensity may be adjusted based on other parameters which are causally proportional or at least in a pre-definable relation to intensity, such as current of an excitation light, photon flux, etc.

Additionally or alternatively, intensity can be defined as the width of an excitation signal and/or of an emission signal, in particular of a peak thereof. In particular it may be intended to provide spectrally and/or timely nearly discrete signals. Such discrete signals can facilitate an unmixing of excited emissions of a plurality of fluorophores of a sample.

For example, based on a global intensity (adjusted in a first step), intensities of one or more, in particular of all, selected excitations can be adjusted in the second step. Alternatively, the global intensity can be defined as an intensity of one of the selected excitation, such that only the intensities of the non-adjusted excitations are adjusted in the second step.

An embodiment of the first aspect is related to a device for image acquisition, *wherein the global excitation is based on the selected excitation with a predefined parameter, in particular intensity*, *that is largest relative to the parameter of the other selected excitations, or based on a compounded excitation based on two or more of the selected excitations.*

In an exemplary embodiment, a global excitation may relate to intensity. In this case, the selected excitation is used as global excitation, which has the largest intensity relative to the other selected excitations. Thereby, an excitation can be defined, which may always remain the largest intensity and/or that may be capped at a pre-defined intensity value. A cap can in particular be necessary to limit photointoxination of a sample by an excitation. The intensities of the remaining selected excitation can then be, e.g., scaled relative to the adjusted global intensity.

In another exemplary embodiment, a global excitation may be compounded by a plurality (in particular all) selected excitations. This can also be based on the intensity parameter of the selected excitations. For example, the intensities can be adjusted in a prior step for a good unmixing performance. Then the relations of the intensities of the selected excitations between each other is defined. Then, a global intensity can be defined as the sum of all intensities.

This global intensity can then be adjusted, thereby scaling all of the intensities of the selected excitations. This can be done, e.g., to limit phototoxicity caused to a sample by all excitations together.

Although the two prior exemplary embodiments were described in relation to the excitation configuration parameter "intensity", other parameters (such as described above, e.g. power, energy, frequency/spectrum, etc.) can also be used to define a global excitation and to adjust (parameters of) selected excitations based on the parameter and value of the global excitation. The global excitation can be adjusted manually and/or automatically.

By using a global excitation, selected configurations of selected excitations can be adjusted efficiently.

An embodiment of the first aspect is related to a device for image acquisition, *wherein the adjustment of a configuration of one or more of the non-adjusted excitations is based on a linear scaling of a configuration parameter of the one or more non-adjusted excitations relative to a configuration parameter of the adjusted excitation* .

A plurality of parameters of selected excitations can be scaled linearly based on a parameter of a global excitation. The parameter can, e.g., be a parameter from a global excitation, which was adjusted in a first step. This parameter can also be called "leading parameter", as it defines how the respective parameters of the other excitations change.

Then, in a second step, the respective parameters of each of the non-adjusted excitations change in direct proportion to the adjusted parameter of the global excitation. The adjusted parameter acts as a reference point, and the other parameters are adjusted, e.g., according to a fixed ratio or constant. For example, if P_global_new is the adjusted parameter and P_1_old, P_2_old, P_3_old are the respective parameters of the non-adjusted excitations, their values can be determined by the relationships P_1_new = k_1 * P_1_old, P_2_new = k_2 * P 2_old, and P_3_new = k_3 * P_3_old, where k_1, k_2, k_3 are scaling constants that depend on P_global_new.

The scaling constants can have pre-defined, individual values. For example the scaling constants can have pre-defined values that sum up to 1. Alternatively, the scaling constants can have the same value. For example, the scaling constants can have a value defined by the latest adjustment of the P_global: k_1 = k_2 = k_3 := P_global_new/P_global_old, wherein P_global_new is the parameter value of the global excitation parameter after an adjustment and P_global_old is the parameter value before the adaptation. Hence, if during an adjustment the global parameter is doubled (e.g. adjusted from P_global_old = 2 to P_global_new = 4), then also all parameters of the other excitations are doubled. This keeps proportions between the parameters constant.

This may in particular be useful for a later unmixing because then only the proportions need to be pre-defined and the absolute values of the selected excitations can differ and therefore be chosen according to other criteria. In other words: By a linear scaling it can be assured that proportions needed for an unmixing of emissions caused by the adjusted excitation can be performed efficiently.

Although the preceding embodiment of a linear scaling was described with a global excitation (parameter) as leading parameter, this can also be done based on one of the selected excitation parameters as a leading parameter. Alternatively to a linear scaling one could change the scaling factor depending on the wavelength of the laser light according to pre-defined function, a lookup-table, or a calibration curve. For laser light with a wavelength of 600nm the factor could be adjusted to 1.8 whereas for 700nm the factor could be adjusted to 1.6.

An embodiment of the first aspect is related to a device for image acquisition, *wherein the adjustment of a configuration of one or more of the excitations is based on a pre-defined requirement for unmixing excited emissions of an excited sample.*

Unmixing different fluorophores may require the characterization of each fluorophores emission properties in the context of the experimental setup (tissue type, composition of fluorophores, etc.). This information can then be used to unmixing a signal from a sample, in particular given that the experimental conditions are nearly identical, including e.g. hardware settings like detection bands and ratios between laser intensities. Still, the sample to be imaged might differ in overall and/or individual staining strength, depth of the region of interest within the sample and so on. This often requires the global and individual adjustment of intensities, which is possible as long as a number of criteria is not violated.

For example, after adjustment the selected excitations can be evaluated if an unmixing of emissions within an image captured based on the adjusted excitations can still be possible. If this is the case, the adjusted excitations can be confirmed and in particular approved for further provision to an imaging device. If the adjusted excitations violate an unmixing requirement, i.e. if based on the adjusted excitation it can be evaluated that an unmixing would not be possible or only possible with low quality, then a confirmation can be refused such that no provision of the adjusted excitation configurations is possible. Thereby, it can be assured that excitation configurations provided to an imaging device enable an unmixing when used to excite a sample.

An embodiment of the first aspect is related to a device for image acquisition, *wherein the adjustment of a configuration of one or more of the excitations is based on a characteristic of an emission-signal, in particular a dispersion, excited by a configured excitation* .

An emission signal is the signal generated by a stained sample, when excited with excitations according to the provided excitation configurations. Information about an emission signal can be extracted from an image captured by an imaging device. This information can be used, in order to adjust the excitation configurations. This can in particular be done automatically. Additionally or alternatively, a range for adjustment of excitation configurations (such as an intensity of an excitation) can be provided. This can in particular be helpful in case an adjustment (in the first step) is performed manually and/or in case a further adjustment is allowed manually.

An emission signal can also be an estimated emission signal. In this case, the estimated emission signal can be modelled, in particular based on prior emission information of the same or of similarly stained samples.

In the context of fluorescence microscopy, dispersion may refer to the spreading of emitted light from a fluorophore into its constituent wavelengths (colors) and/or to reduction of the emitted light's intensity. This can be caused by the optical-effective parts of a stained sample and/or by the optical system of the imaging device, such as lenses and filters. Dispersion can affect the resolution and clarity of the fluorescent signal. Another type of dispersion can relate to the difference between an excitation light transmitted by an imaging device and an emitted light caused by a fluorophoric substance in/on a sample. The larger the difference, the larger the dispersive effect. Due to dispersion (parts of an) emitted light from a first fluorophore may be assigned falsely to a second fluorophore (crosstalk).

Dispersion may be avoided. Therefore, e.g., images based on single excitations can be captured and evaluated. Based on the evaluation it can be understood if a dispersion of an emission is too large. If this is the case an adjustment can be performed, e.g. a decrease of an intensity and/or a change of a spectrum of an excitation signal. By such an adjustment a crosstalk can be reduced and/or a larger clarity/resolution of a captured image can be obtained.

An embodiment of the first aspect is related to a device for image acquisition, *wherein the adjustment of a configuration of one or more of the excitations is based on a pre-defined intensity of a staining of a fluorophore within an image.*

In case an image is only stained weakly, then a higher intensity of excitation light may still lead to a useful image. In case of a plentifully stained image, a lower intensity of an exciting light may be reasonable in order to reduce phototoxicity.

An embodiment of the first aspect is related to a device for image acquisition, *wherein the adjustment of a configuration of one or more of the excitations is based on pre-defined depth within a stained image.*

A sample may be stained at different locations, wherein the locations differ in their depth (i.e. their distance from the optical system of the imaging device that captures the image). Then it can be assumed that the deeper a fluorophore in a sample is located, the more excitation light is filtered-out before it reaches the stained location. Therefore, the excitation intended to excite this fluorophore may be increased in their intensity. In particular this can be done for the fluorophore that is located deepest in the sample. The excitation for this fluorophore can be defined as the leading or global fluorophore that is adjusted in a first step. The excitations for the other fluorophores can then be determined based on the leading/global excitation.

An embodiment of the first aspect is related to a device for image acquisition, *wherein the adjustment of a configuration of one or more of the excitations is based on a pre-defined brightness of an image of the sample.*

A sample may be only visible with a reduced brightness. This can be the case, if the sample is comprised by a larger object. For example a sample can be a mitochondrion located in a cell body. In order to capture a useful image of the mitochondrion, the intensity of the excitation light may be adjusted to a large value.

An embodiment of the first aspect is related to a device for image acquisition, *wherein the adjustment of a configuration of one or more of the excitations is based on a pre-defined SNR, in particular a degree of autofluorescence, of an image of the sample.*

A stained sample may exhibit different noise levels at different parts of the sample and/or different autofluorescence characteristics. To increase a signal-to-noise ratio (SNR) in a captured image, excitation light may be adapted to these characteristic. For example, an intensity of an excitation can be increased on order to increase an SNR for a specific fluorophore located at a specific location of a sample. Additionally or alternatively, an intensity of an excitation may be decreased, when it leads to unintended autofluorescence. Although explained in the context of intensity, this can also be done with other parameters of a configuration of an excitation. For example, to avoid autofluorescence, a spectrum of an excitation light can be adjusted such that autofluorescence is reduced.

An embodiment of the first aspect is related to a device for image acquisition, *configured to:*
- *display the configurations of the adjusted excitations;*
- *display a range in which an adjustment of a configuration of one or more of the excitations satisfies a pre-defined requirement, in particular an unmixing requirement.*

One or more of parameters of configurations of excitations can be displayed via a user interface, for example one a monitor. These values can be the initial values and/or the values adjusted after the first step and/or after the second step. Additionally to the display of one or more of these values, it can be indicated how much one or more of these values may be further adjusted in order to satisfy a pre-defined requirement for the excitation(s). Such a requirement can, e.g., a suitability for unmixing a plurality of emitted signals captured later based on the provided excitation configurations.

An embodiment of the first aspect is related to a device for image acquisition, *configured to:*
- *receive information about a further adjustment of a respective configuration of one or more or the selected excitations.*

A further adjustment can be performed manually, e.g. via a keyboard or a mouse input. For one or more of the adjusted excitations, a range can be indicated in which a further adjustment is recommended and/or reasonable. This range can in particular be related to an adjustment which still allows a unmixing of light emissions caused by the excitations. Additionally or alternatively, a range can be related to a maximum of phototoxicity and/or a minimal required signal strength.

In particular the user can be informed by the device if a further adjustment if out of a pre-defined (recommended or allowable) range. In particular, a user can be allowed to only adjustment one or more excitation parameters within the pre-defined range.

A second aspect of the present disclosure is related to a computer-implemented method for image acquisition,
*comprising the steps:*
- *selecting a plurality of excitations for exciting a sample,*
- *adjusting a configuration of one of the selected excitations or of a global excitation* , *wherein the global excitation is based on one or more of the selected excitations;*
- *adjust a configuration of one or more of the non-adjusted selected excitations and*/*or of the global excitation, based on the adjusted excitation;*
- *providing the adjusted configurations for performing an excitation of the sample.*

A method according to the second aspect can comprise one or more steps to execute one or more functions of a device according to the first aspect of this disclosure. Steps of a method according to the second aspect of this disclosure can be configured such that they relate to, configure, or execute features of a device according to the first aspect of this disclosure.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a device for image acquisition according to an embodiment of this disclosure.
Fig. 2 illustrates a device for image acquisition according to an embodiment of this disclosure.
Fig. 3 illustrates a microscope system according to an embodiment or for an embodiment of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure and which illustrate specific aspects in which the present disclosure can be understood. Identical reference signs refer to identical or at least functionally or structurally similar features.

### Detailed description

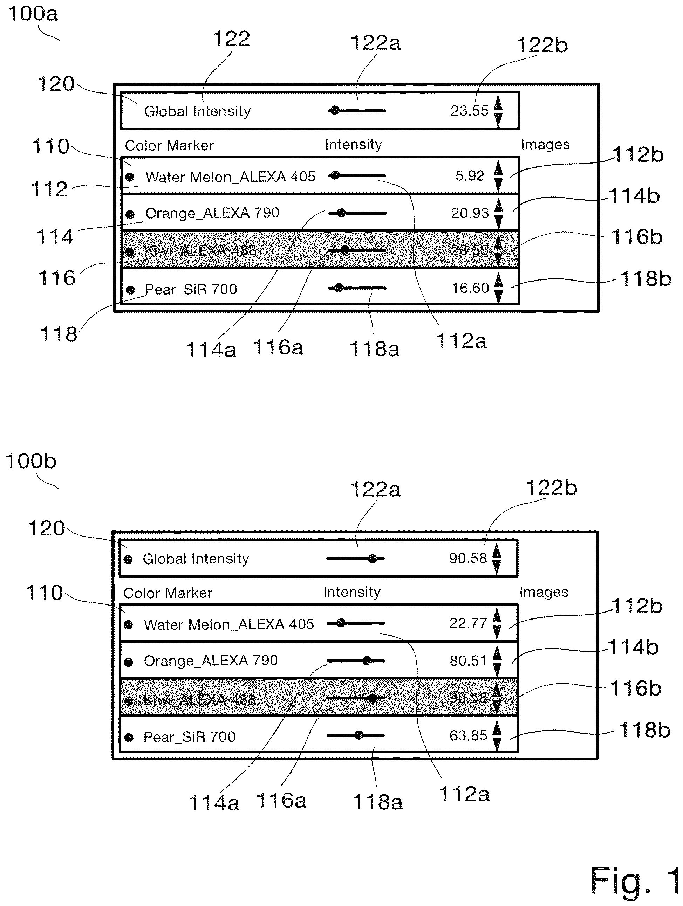

Fig. 1 shows a graphical user interface of an imaging device according to an embodiment of this disclosure. The interface has two main parts: A lower part 110, in which configurations of a plurality of selected excitations 112, 114, 116, 118 are depicted. And an upper part 120, in which a global setting is depicted.

In the lower part 120 a plurality of different excitations can be selected to configure excitations for a stained sample that is to be analyzed, e.g. by a microscope that excites the sample with the selected and configured excitations. Each excitation is assigned to a fluorophore or dye. The first excitation 112 is assigned to "ALEXA 405", which is a dye coloring in the blue/violet region, and which has a peak excitation at 405nm. The second excitation 114 is assigned to "ALEXA 790", which is a near-infrared dye, with a peak excitation at 790nm. The third excitation 116 is assigned to a third member of the ALEXA-family, "ALEXA_488", which is a green dye and has a peak excitation at 488nm. The third excitation 118 is assigned to a siliconrhodamine dye, "SiR_700", which reflects red light that is excited at a peak excitation of 700nm.

Further, in the lower part 110, the actually adjusted excitation conditions for the different dyes are depicted. This is done visually via a slider 112a, 114a, 116a, 118a for each excitation. Additionally, an absolute value 112b, 114a, 116a, 118a for the configured parameter is provided. In this case, the configured parameter for each excitation is the intensity.

In the upper part 120 of the user interface visualizes a global intensity 122. The global intensity can be controlled in a first step of an adjustment procedure. The control can be done by adjusting a slider 122a. Additionally, the value of the global intensity can be adjusted by entering a relative value between 0 and 100 into the number field 122b (or the number field 116b of the assigned excitation).

In one embodiment, the global intensity may be selected as the intensity of one of the selected dyes. The selection of the dye for the global intensity can be performed, e.g., by touching the screen of the user interface in the area where the respective dye is described. The selected dye for global intensity is therefore illustrated dark in the lower part 110 of the user interface. In this case, the global intensity is defined to be the intensity of the excitation for "ALEXA 488".

In another embodiment, the global intensity can be an value that provides a guiding parameter for adjusting the selected intensities. For example, if the global intensity is doubled, also the selected intensities are doubled. The adaptation of the intensities of the selected excitations based on the global intensity can follow a linear or a non-linear relationship.

In this embodiment, the slider for the global intensity corresponds to the maximum individual intensity. This may be defined to assure, e.g., that the selected individual excitation for the global intensity always remains the highest intensity amongst the intensities of the selected excitations.

In the upper subfigure 100a, an initial configuration is depicted. In the lower subfigure 100b an adjusted configuration is illustrated. The adjustment follows two steps. In a first step, the global intensity 122 is adjusted. In a second step, based on the adjusted global intensity, the (non-adjusted) selected excitations are adjusted. These steps can be performed for both depicted configurations 100a, 100b. An adjustment in the first step can be done manually and/or automatically. An adjustment in the second step can be done automatically. Further, in a third step, manual adjustments may be allowed for the individual selected excitations.

By comparing the initial configuration in subfigure 100a to the adjusted configuration in subfigure 100b it can be seen that the global intensity (i.e. the intensity of the excitation for the dye "ALEXA 488") was adjusted (in the first step of the procedure) from the value 23.55 % to the value 90.58%. Hence, the global intensity was changed by a factor k = 90.58/23.55 = 3.84. The intensities of the non-adjusted intensities of the other excitations 112, 114, 118 were adjusted (in the second step of the procedure) by the same factor k = 3.84 to the respective intensity values 112b, 114b, 118b. Setting the global intensity to 0 is prevented here by a very small threshold value. Otherwise, all intensities would assume the value 0 and no longer react when the global intensity is subsequently increased. It would also be possible to buffer the individual values, which would be recalled as soon as the global intensity is increased from 0 to >0. The user interface may have an option to reset the intensities to the initial values and/or to pre-defined values.

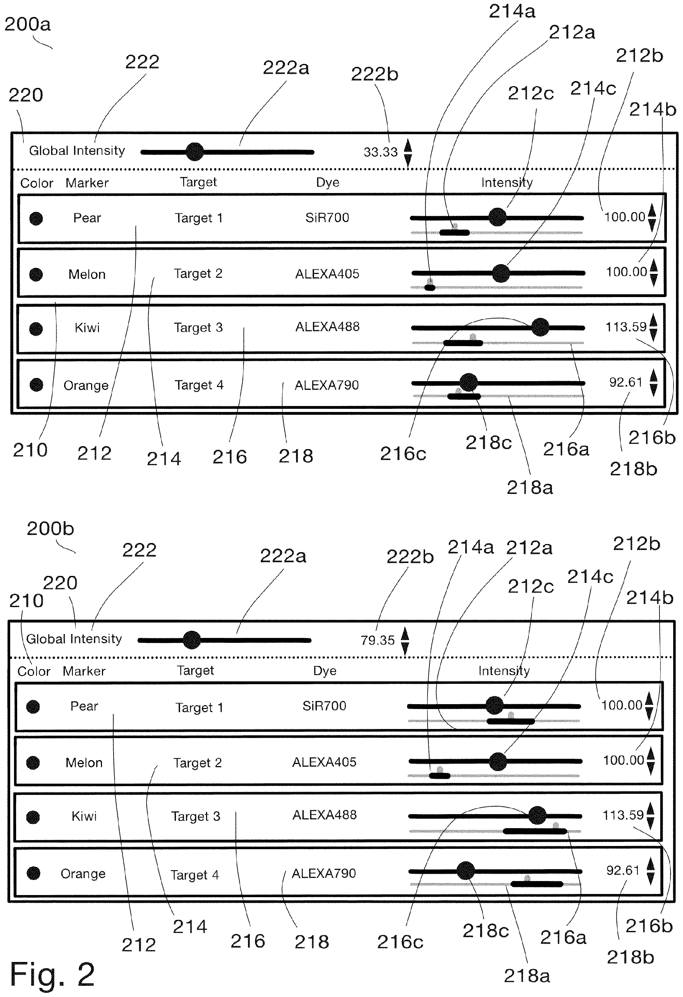

Fig. 2 shows a graphical user interface of an imaging device according to an embodiment of this disclosure. The interface is similar to the interface of Fig. 1 and has two main parts: A lower part 210, in which configurations of a plurality of selected excitations 212, 214, 216, 218 are displayed, including potential targets ("target 1", "target 2", etc.), which should be highlighted in a sample and which are not specified in detail in this example. The interface also has an upper part 220, in which a global configuration 222 is displayed and can be inputted.

For the global excitation 212 - 218, an intensity value is provided by the configuration slider 222a. The adjusted global intensity is shown numerical in the number field 222b. This field can also be used to input a global intensity value. In this case, the slider 222a follows automatically.

For the selected excitations, the intensity value is provided by an indicator 212a, 214a, 216a, 218a. Each indicator comprises an intensity value indicator (grey vertical line), a total range indicator (grey thin horizontal line; representing possible values an intensity can be adjusted to), and deviation range bar (thick black horizontal line; which shows how an automatically determined intensity can further be adjusted). Since the intensity values are automatically determined based on the global intensity value 222a, 222b there is no need for providing an input field for these values.

However, the automatically determined intensity values for the selected excitations can be manually adjusted. The adaptation may amount to maximal ±20% of the automatically determined value (determined as 100.00 (%)) and can be inputted in the number field 212b, 214b, 216b, 218b. Additionally, this can be done by the slider 212c, 214c, 216c, 218c for each of the selected intensities.

In this embodiment, in the first example 200a, the global intensity is given by the intensity of the excitation for the dye "ALEXA 488". Hence, the relative value 33 (% ) provided in the number field of the global excitation 222b represents the position of the slider 222a.

This embodiment shows an automated adjustment, wherein in a first step a global intensity is adjusted. In a second step, intensity values for the selected excitations 112 - 118 are determined based on the global intensity value and on a linear scaling which is proportional to the change of the global intensity. In a third step, further adjustments are possible that must remain below a predefined deviation from the automatically determined value (e.g., in order to keep a desired unmixing performance). The first three steps are explained with the example configuration 200a. In a fourth step, the global intensity is adapted. This is explained with the example configuration 200b. The four steps are explained in more detail now.

In a first step, a value for a global intensity 222a, 222b is adjusted. This adjustment can be performed manually by a user. Additionally or alternatively, the adjustment can be performed automatically. The global intensity 222 is tied to the intensity of third selected excitation 216 ("ALEXA 488").

In a second step, intensity values are automatically adjusted for the three non-adjusted selected excitations 212, 214, and 218. The adjustment is based on the global intensity value 222a, 222b (i.e. based on the intensity value of the selected intensity 216). The adjusted intensities in the second step are depicted graphically by the indicators 212a, 214a, 218a (grey vertical line).

In a third step further adjustments are allowed. In order to do this, a slider 212c - 218c (similar to the slider 222a for the global intensity) is arranged over each indicator 212a - 218a. This slider allows to manually adjust a deviation of the respective automatically determined intensity. The deviation is configured to stay within ±20% of the automatically derived intensity value. The value of the deviations is depicted (and can be entered) in the number fields 212b - 218b for each excitation. If no manual adjustment is performed (i.e. if the value determined in the second step is used), the number field shows a value of 100 (%), as in the number fields 212b, 214b for the first two selected excitations. The possible range of deviation ±20% from the intensity value in the second step is also depicted by the black, thick horizontal line of the indicator 212a - 218a. As it can be seen, the third selected excitation 216 (which determined the global intensity at the beginning) was manually adjusted by +13.59% to 113.59 %. Additionally, the intensity of the fourth selected excitation 218 was manually adjusted by -7.39% to 92.61 %. Hence, the respective intensity value indicator (grey vertical line) is located left on the range bar (black, thick horizontal line) of the indicator 218a.

The individual intensities can be manually adjusted by ±20%, but will adapt to a change in the global intensity, if necessary. If the global intensity is set to 100, for example, individual intensities (or potential adaptation ranges) may be reduced by up to ±0%.

A fourth step is shown in the lower subfigure configuration 200b. In the fourth step, the global intensity was changed from 33.33 (%) to 79.35 (%). This automatically changed the intensity values (grey vertical line) of the indicators 212a, 214a, 218a. Also the deviation bar (black, thick horizontal) of each respective indicator consequently changed. The manual deviations still amount to the values initially provided (i.e. in subfigure 200a).

Some embodiments relate to a microscope comprising a system as described in connection with one or more of the Figs. 1 to 2. Alternatively, a microscope may be part of or connected to a system as described in connection with one or more of the Figs. 1 to 2.

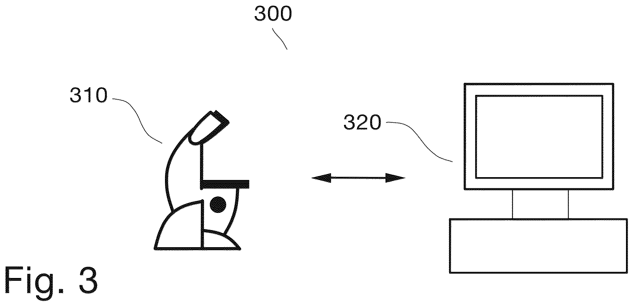

Fig. 3 shows a schematic illustration of a system 300 configured to perform a method described herein. The system 300 comprises a microscope 310 and a computer system 320. The microscope 310 is configured to take images and is connected to the computer system 320. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or nontransitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100a: initial configuration
- 100b: adjusted configuration
- 110: color markers
- 112: excitation for ALEXA 405
- 112a: slider for ALEXA 405
- 112b: number field
- 114: excitation for ALEXA 790
- 114a: intensity value for ALEXA 790
- 114b: number field
- 116: excitation for ALEXA 488
- 116a: intensity value for ALEXA 488
- 116b: number field
- 118: excitation for SiR 700
- 118a: intensity value for SiR 700
- 118b: number field
- 120: global setting
- 122: global intensity
- 122a: slider for global intensity
- 122b: number field for global intensity
- 200a: first example configuration
- 200b: second example configuration
- 210: configurations of selected excitations
- 212: excitation for SiR 700
- 212a: indicator selected intensity
- 212b: value selected intensity adaptation
- 212c: slider selected intensity adaptation
- 214: excitation for ALEXA 405
- 214a: indicator selected intensity
- 214b: value selected intensity adaptation
- 214c: slider selected intensity adaptation
- 216: excitation for ALEXA 488
- 216a: indicator selected intensity
- 216b: value selected intensity adaptation
- 216c: slider selected intensity adaptation
- 218: excitation for ALEXA 790
- 218a: indicator selected intensity
- 218b: value selected intensity adaptation
- 218c: slider selected intensity adaptation
- 220: global setting
- 222: global configuration
- 222a: slider global intensity
- 222b: value global intensity
- 300: microscope system
- 310: microscope
- 320: computer

## Claims

1. Device for image acquisition,
configured to:
- select a plurality of excitations (112, 114, 116, 118) for exciting a sample,
- adjust in a first step:
-- a configuration (116a, 116b) of one of the selected excitations (106) or;
-- a configuration (122a, 122b) of a global excitation (122), wherein the global excitation is based on one or more of the selected excitations;
- adjust in a second step and based on the configuration adjusted in the first step:
-- a configuration (112a, 112b; 114a, 114b; 118a, 118b) of one or more of the non-adjusted, selected excitations; and/or
-- a configuration (122a, 122b) of the global excitation,
respectively;
- providing the adjusted configurations (112a, 114a, 116a, 118a, 112b, 114b, 116b, 118b) for performing an excitation of the sample.

2. The device according to the preceding claim,
configured to:
- obtain selection information from a user interface (100a, 100b), and wherein the selection of the excitations is based on the obtained selection information;
- obtain adjustment information from the user interface, and wherein the adjustment of the configuration of the excitation in the first step is based on the obtained adjustment information.

3. The device according to one of the preceding claims,
wherein a configuration of an excitation can comprise one or more of:
- frequency-dependent information;
- time-dependent information.

4. The device according to one of the preceding claims,
wherein an adjustment of the configuration of one or more of the excitations (112, 114, 116, 118) comprises an adjustment of an intensity of the excitation.

5. The device according to one of the preceding claims,
wherein the global excitation (122) is based on the selected excitation with a predefined parameter, in particular intensity (116), that is largest relative to the parameter of the other selected excitations, or based on a compounded excitation based on two or more of the selected excitations.

6. The device according to one of the preceding claims,
wherein the adjustment of a configuration (112a, 112b; 114a, 114b; 118a, 118b) of one or more of the non-adjusted excitations is based on a linear scaling of a configuration parameter of the one or more non-adjusted excitations relative to a configuration parameter of the adjusted excitation (116a, 116b).

7. The device according to one of the preceding claims,
wherein the adjustment of a configuration of one or more of the excitations (112, 114, 116, 118) is based on a pre-defined requirement for unmixing excited emissions of an excited sample.

8. The device according to one of the preceding claims,
wherein the adjustment of a configuration of one or more of the excitations (112, 114, 116, 118) is based on a characteristic of an emission-signal, in particular a dispersion, excited by a configured excitation (112, 114, 116, 118).

9. The device according to one of the preceding claims,
wherein the adjustment of a configuration of one or more of the excitations (112, 114, 116, 118, 122) is based on a pre-defined intensity of a staining of a fluorophore within an image.

10. The device according to one of the preceding claims,
wherein the adjustment of a configuration of one or more of the excitations (112, 114, 116, 118, 122) is based on pre-defined depth within a stained image.

11. The device according to one of the preceding claims,
wherein the adjustment of a configuration of one or more of the excitations (112, 114, 116, 118, 122) is based on a pre-defined brightness of an image of the sample.

12. The device according to one of the preceding claims,
wherein the adjustment of a configuration of one or more of the excitations (112, 114, 116, 118, 122) is based on a pre-defined SNR, in particular a degree of autofluorescence, of an image of the sample.

13. The device according to one of the preceding claims,
configured to:
- display the configurations of the adjusted excitations;
- display a range in which an adjustment of a configuration of one or more of the excitations (112, 114, 116, 118, 122) satisfies a pre-defined requirement, in particular an unmixing requirement.

14. The device according to one of the preceding claims,
configured to:
- receive information about a further adjustment of a respective configuration of one or more or the selected excitations.

15. A computer-implemented method for image acquisition,
comprising the steps:
- selecting a plurality of excitations (112, 114, 116, 118) for exciting a sample,
- adjusting a configuration of one of the selected excitations or of a global excitation (122), wherein the global excitation is based on one or more of the selected excitations;
- adjust a configuration of one or more of the non-adjusted selected excitations and/or of the global excitation, based on the adjusted excitation;
- providing the adjusted configurations (112a, 114a, 116a, 118a, 112b, 114b, 116b, 118b) for performing an excitation of the sample.
